# EUROPÄISCHE PATENTSCHRIFT

(11) **EP 0 770 853 B1**
(45) Veröffentlichungstag und Bekanntmachung des Hinweises auf die Patenterteilung: **10.03.1999**
(21) Anmeldenummer: 96250242.3
(22) Anmeldetag: 24.10.1996
(51) Int. Cl.: G01D 15/24

(54) **Verfahren zum Positionieren eines Schreibstiftes in einer Registriereinrichtung**
Method for positioning of a pen in a recording device
Procédé pour positionner un élément d'écriture dans un appareil d'enregistrement

(30) Priorität: 27.10.1995 DE 19541130
(43) Veröffentlichungstag der Anmeldung: 02.05.1997
(73) Patentinhaber: Hartmann & Braun GmbH & Co. KG, 65760 Eschborn (DE)
(72) Erfinder: Bruhn, Arno, 30655 Hannover (DE); Kirste, Hans-Herbert, 31628 Landesbergen (DE)
(74) Vertreter: Presting, Hans-Joachim, Dipl.-Ing.

(56) Entgegenhaltungen:
- EP-A- 0 078 367
- US-A- 4 318 110
- US-A- 4 368 411

## Beschreibung

Die Erfindung betrifft ein Verfahren zum Positionieren eines Schreibstiftes in einer Registriereinrichtung zum Aufzeichnen des Zeitverlaufes eines anschaltbaren Meßsignals nach dem Oberbegriff des Patentanspruchs 1.

Die US-A-4 318 110 offenbart eine Anordnung zum Positionieren eines Schreibstiftes in einer Registriereinrichtung zum Aufzeichnen des Zeitverlaufs mindestens eines anschaltbaren Meßsignals, bei dem die aktuelle Schreibstiftposition bestimmt, das Meßsignal mit der aktuellen Schreibstiftposition verglichen und eine Positionierabweichung als Differenz aus dem Meßsignal und der aktuellen Schreibstiftposition bestimmt wird. Dabei wird in Abhängigkeit von der Positionierabweichung, der Schreibstift entsprechend nachgeführt, wobei der Nachführungskreis ein Mittel zur galvanisch getrennten Übertragung elektrischer Signale beinhaltet.

Aus der EP 0 078 367 ist ein Aufzeichnungs-/Anzeigeapparat für industrielle Verfahren mit einer bewegbaren Vorrichtung, die mit ihrer Stellung die Größe einer zu überwachenden Verfahrens- oder Prozeßbedingung anzeigt und durch einen Schrittmotor antreibbar ist, der durch sequentielle Impulse von einer Taktimpulseinrichtung betätigbar ist, bekannt, der mit einer Rückkopplungseinrichtung zum Entwickeln eines Rückkopplungssignals entsprechend der Stellung der bewegbaren Vorrichtung innerhalb eines Gesamtmeßbereiches von Stellungen dieser Vorrichtung mit einer Abweichungseinrichtung zum Erzeugen eines Abweichungssignals, das die Differenz zwischen dem Rückkopplungssignal und einem Meßsignal angibt. Dabei ist eine auf das Abweichungssignal ansprechende Totbandeinrichtung zum Entwickeln eines Steuer- oder Regelsignals vorgesehen, die anspricht, wenn das Abweichungssignal außerhalb eines vorbestimmten Totbandes um die durch das Meßsignal repräsentierte Stellung herum liegt. Weiterhin ist eine auf die anfängliche Entwicklung des Steuer- oder Regelsignals ansprechende Schaltungseinrichtung zum Aktivieren des Schrittmotors zwecks Erzeugung einer begrenzten Korrekturwirkung eines vorgegebenen Ausmaßes zum Zurückführen der Vorrichtung in die durch das Meßsignal repräsentierte Stellung und einer auf das Steuer- und Regelsignal ansprechende zweite Schaltungseinrichtung zum Aktivieren des Schrittmotors über das vorgegebene Ausmaß hinaus vorgesehen, die dann anspricht, wenn das Abweichungssignal am Ende einer vorbestimmten Zeitspanne nach der Aktivierung des Schrittmotors durch die erste Einrichtung immer noch außerhalb des Totbandes liegt.
Dieser bekannte Apparat ist mit dem Nachteil behaftet, daß die durch die Totbandeinrichtung vorbestimmte Bandbreite des Meßsignals sich als Aufzeichnungsfehler zwischen dem tatsächlichen Meßsignal und dem aufgezeichneten Signal bemerkbar macht. Änderungen des Meßsignals innerhalb der Bandbreite der Totbandeinrichtung werden nicht aufgezeichnet. Insoweit ist die Bandbreite der Totbandeinrichtung ein Maß für die Aufzeichnungsgenauigkeit beziehungsweise der Güteklasse der Aufzeichnungseinnchtung.

Überdies ist aus der Erfahrung bekannt, daß eine Verringerung der Bandbreite der Totbandeinrichtung zum Zwecke der Erhöhung der Aufzeichnungsgenauigkeit zu Instabilitäten des Positionierregelkreises führt, die sich in Überschwingen des Aufzeichnungssignals gegenüber dem Meßsignal zeigen.

Insbesondere bei der Aufzeichnung von Meßsignalen, die in Meßsignalquellen generiert werden, die sich physisch in einem explosionsgefährdeten Bereich befinden, sind galvanische Trennungen zwischen Meßsignalquellen innerhalb des explosionsgefährdeten Bereichs und Registriereinrichtungen und sonstige Signalverarbeitungsmittel außerhalb der explosionsgefährdeten Bereiche zwingend vorgeschrieben.

In der DE 36 07 249 ist ein Stiftschreiber beschrieben, der grundsätzlich zum Aufzeichnen von Meßsignalen aus explosionsgefährdeten Bereichen geeignet ist. Der Stiftschreiber ist ausgestattet mit mindestens einer ersten Einheit, bestehend aus einem beweglichen Schreibstiftwagen, der abhängig von der Größe eines Meßsignals in einer Richtung senkrecht zur Bewegungsrichtung eines Kurven blattes verfahrbar ist, eine Servoreinheit die ein Potentiometer zum Erzeugen eines der Lage des Schreibstiftwagens zugeordneten Lagerückkopplungssignals aufweist sowie einstückig mit einem Servoverstärker ausgeführt ist, der die Differenz zwischen dem Lagerückkopplungssignal des Potentiometers und dem Meßsignal erzeugt und einen Servomotor in vorbestimmter Richtung so ansteuert, daß die Differenz zu Null wird, wobei der Schreibstiftwagen entsprechend verfahrbar ist und eine Leitachse die zwischen beiden Seiten eines Endes einer gedruckten Schaltungsplatte angeordnet ist und auf der der Schreibstift-Wagen abnehmbar montiert ist, wobei der Schreibstift-Wagen mit einem Schreibstift versehen ist, der analog die Größe des Meßsignals auf dem Kurvenblatt aufzuzeichnen vermag, wobei ein Meßsignal mit einem Analog/Digital-Wandler, im folgenden als A/D-Wandler bezeichnet, in ein Digitalsignal umgewandelt wird, das dann unter der Steuerung eines Mikroprozessors über einen Digital/Analog-Wandler, im folgenden als D/A-Wandler bezeichnet, der Servoeinheit eingespeist wird. Dabei sind zwischen den A/D-Wandlern und dem Mikroprozessor Optokoppler vorgesehen, über die das das Meßsignal repräsentierende Digitalsignal übertragen wird. Das digitale Ausgangssignal des Mikroprozessors wird über einen D/A-Wandler in ein Analogsignal rückgewandelt, wobei mit der Amplitude des rückgewandelten Analogsignals ein Servomotor gesteuert wird.

Die Positionierung der Schreibsysteme in einem derartigen Stiftschreiber ist recht genau dem Meßsignal folgend darstellbar, aber nachteiligerweise sehr aufwendig, da jedem einzelnen Meßkanal jeweils ein A/D-Wandler und ein D/A-Wandler zuzuordnen sind, wobei die Reproduktionsgenauigkeit des Meßsignals auf seine Abbildung als aufgezeichnetes Signal durch die Datenbitbreite des digitalen Ausganges des A/D-Wandlers und des digitalen Einganges des D/A-Wandlers limitiert ist. Dadurch steigt mit zunehmender geforderter Aufzeichnungsgenauigkeit für n Aufzeichnungskanäle der erforderliche Aufwand an 2n Wandlerbaugruppen zur Umsetzung analog-digital-analog, wobei stets ein Restfehler von einer Quantisierungseinheit des A/D-Wandlers verbleibt. Darüber hinaus sind zur Übertragung eines k bit breiten Datenwortes, das am Ausgang eines A/D-Wandlers abgreifbar ist entweder k Optokoppler oder jeweils ein Parallel-Serien-Wandler zwischen jedem A/D-Wandler und einem diesen zugeordneten Optokoppler erforderlich.

Der Erfindung liegt daher die Aufgabe zugrunde, ein Verfahren zum Positionieren eines Schreibstiftes in einer Registriereinrichtung, bei der das Meßsignal von den Antriebsmitteln des Schreibstiftes galvanisch getrennt ist, anzugeben, bei dem mit geringem Aufwand eine möglichst hohe Abbildungsgenauigkeit des Meßsignals auf das Aufzeichnungssignal bei möglichst geringem Restfehler erreicht wird.

Erfindungsgemäß wird diese Aufgabe mit den Merkmalen des Patentanspruches 1 gelöst.
Eine vorteilhafte Ausgestaltung der Erfindung geht aus dem Patentanspruch 2 hervor.

Die Erfindung wird nachstehend anhand eines Ausführungsbeispiels näher erläutert.

Die dazu erforderlichen Zeichnungen zeigen:
- Figur 1: ein Prinzipschaltbild für einen Positionierregelkreis
- Figur 2: Zeitverlaufsdiagramme für ausgewählte Signalverläufe

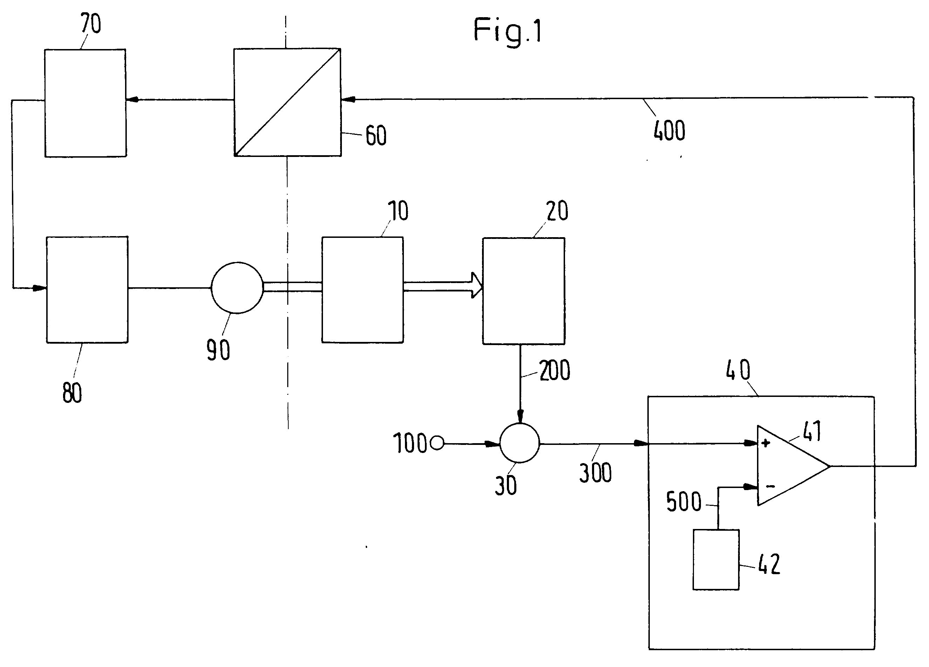

In Figur 1 ist ein Prinzipschaltbild für einen Positionierregelkreis zum Positionieren eines Schreibstiftes 10 in einer Registriereinrichtung zum Aufzeichnen des Zeitverlaufs mindestens eines anschaltbaren Meßsignals 100 gezeigt, der zur Durchführung des Verfahrens geeignet ist. Die Registriereinrichtung selbst weist für sich bekannte Mittel zum Transport eines Aufzeichnungsträgers, mindestens ein Schreibsystem bestehend aus einem elektrischen Antriebsmotor 90, einer Getriebevorrichtung zum Umsetzen der rotatorischen Antriebsbewegung des Antriebsmotors 90 in eine translatorische Bewegung des Schreibstiftes 10 quer zur Transportrichtung des Aufzeichnungsträgers und Mittel zur Aufnahme des Schreibstiftes 10, die der translatorischen Bewegung des Abtriebes der Getriebevorrichtung folgend angeordnet sind, auf. Darüber hinaus ist die Registriereinrichtung mit Mitteln 20 zur Bestimmung der aktuellen Schreibstiftposition mit Ausgabe eines der Schreibstiftposition adäquaten Schreibstiftpositionssignals 200 und Mitteln zur Steuerung des Antriebsmotors 90 entsprechend dem Meßsignal 100 in Abhängigkeit von dem aktuellen Schreibstiftpositionssignal 200 ausgestattet.

Im einzelnen ist ausgehend von den Mitteln 20 zur Bestimmung der aktuellen Schreibstiftposition eine Summationseinrichtung 30 vorgesehen, die eingangsseitig mit dem Schreibstiftpositionssignal 200 und dem Meßsignal 100 beaufschlagt ist und ausgangsseitig eine Positionierabweichung 300 als Differenz aus dem Meßsignal 100 und dem Schreibstiftpositionssignal 200 abgibt. Die Positionierabweichung 300 ist ein Maß für den Augenblickswert des Fehlers zwischen dem aufzuzeichnenden Meßsignal 100 und dem anhand der aktuellen Schreibstiftposition tatsächlich aufgezeichneten Meßwert, der über das Schreibstiftpositionssignal 200 quantifiziert ist.

Der Summationseinrichtung 30 ist ein Pulsbreitenmodulator 40 nachgeschaltet, der aus einem Rampengenerator 42 und einer Komparatorschaltung 41 mit zwei Eingängen aufgebaut sein kann, wobei an den ersten Eingang der Komparatorschaltung 41 die Positionierabweichung 300 aufgeschaltet ist und an den zweiten Eingang der Komparatorschaltung 41 das Ausgangssignal des Rampengenerators 42 angeschlossen ist. Das Ausgangssignal des Rampengenerators 42 ist als Rampensignal 500 bezeichnet. Die Komparatorschaltung 41 weist einen Ausgang auf, der gleichermaßen Ausgang des Pulsbreitenmodulators 40 ist und an dem eine pulsbreitenmodulierte Positionierabweichung 400 abgreifbar ist.

Dem Pulsbreitenmodulator 40 sind Mittel 60 zur galvanischen Trennung der pulsbreitenmodulierten Positionierabweichung 400, die galvanisch mit dem Meßsignal 100, dem Schreibstiftpositionssignal 200 und der Positionierabweichung 300 verbunden ist, von den Mitteln zur Steuerung des Antriebsmotors 90 nachgeschaltet.

Dem Mittel 60 zur galvanischen Trennung ist ein Signalumformer 70 nachgeschaltet, der geeignet ist, das pulsbreitenmodulierte Positionierabweichung in eine der Bauart des Antriebsmotors 90 entsprechende Signalspannung umzuformen. Die galvanisch voneinander getrennten Funktionsblöcke sind in Fig. 1 mit einer strichpunktierten Linie voneinander abgegrenzt. Dem Signalumformer 70 ist ein Verstärker 80 zur leistungsmäßigen Anpassung des Signalumformers 70 an den Antriebsmotor 90 nachgeschaltet. Der Antriebsmotor 90 ist über eine nicht dargestellte Getriebevorrichtung elektrisch isoliert mit den Mitteln zur Aufnahme des Schreibstiftes 10 mechanisch gekoppelt. Der Schreibstift 10 ist mechanisch mit den Mitteln 20 zur Bestimmung der Schreibstiftposition verbunden.

Die Positionierabweichung 300 wird mit dem Pulsbreitenmodulators 40 pulsbreitenmoduliert. Die pulsbreitenmodulierte Positionierabweichung 400 wird potentialfrei über die Mittel 60 zur galvanischen Trennung an den Signalumformer 70 übertragen.

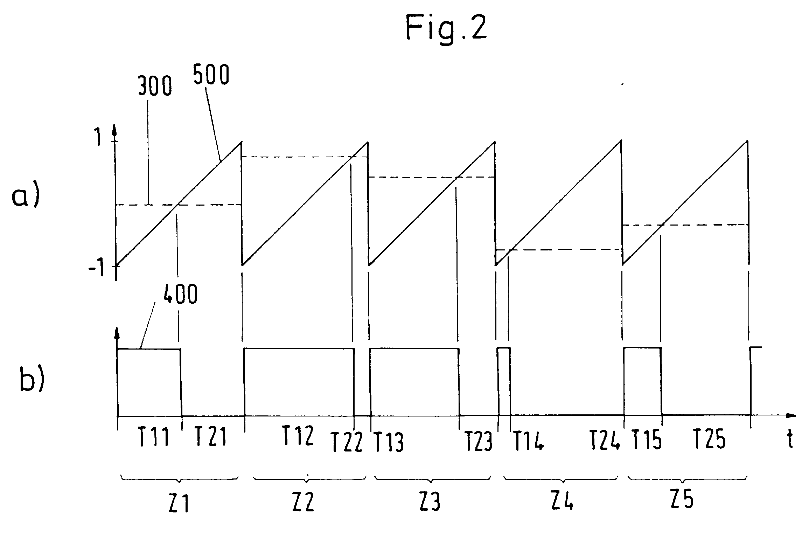

Am Ausgang des Pulsbreitenmodulators 40 ist die pulsbreitenmodulierte Positionierabweichung 400 abgreifbar, deren Periode gemäß Figur 2 aus einer Pulsdauer T11 bis T15 und einer Pulspausedauer T21 bis T25 besteht. In Figur 2 sind Zeitverlaufsdiagramme für ausgewählte Signalverläufe dargestellt. In Figur 2a ist ein normiertes Rampensignal 500 als Sägezahnsignal zwischen den Grenzwerten "-1" und "1" dargestellt. Weiterhin sind in Figur 2a verschiedene Zustände Z1 bis Z5 der Positionierabweichung 300 als gestrichelte Linie zwischen den Grenzwerten "-1" und "1" normiert dargestellt. In Figur 2b ist die pulsbreitenmodulierte Positionierabweichung 400 während der Zustände Z1 bis Z5 korrespondierend zu der Positionierabweichung 300 dargestellt.

Mit dem Signalumformer wird aus der pulsbreitenmodulierten Positionierabweichung 400 durch Normierung der Differenz aus Pulsdauer und Pulspausedauer über die Summe aus Pulsdauer und Pulspausedauer während jedes Zustandes Z1 bis Z5 eine Steuerspannung für den Elektromotor bestimmt.

In besonderer Ausgestaltung der Erfindung wird aus dem Betrag der über die Summe aus Pulsdauer und Pulspausedauer normierten Differenz aus Pulsdauer und Pulspausedauer die Verfahrgeschwindigkeit des Schreibstiftes bestimmt. Weiterhin wird aus dem Vorzeichen der über die Summe aus Pulsdauer und Pulspausedauer normierten Differenz aus Pulsdauer und Pulspausedauer die Verfahrrichtung des Schreibstiftes bestimmt.

Während des Zustandes Z1 ist die Positionierabweichung 300 gleich Null. Die Pulsdauer T11 der pulsbreitenmodulierten Positionierabweichung 400 und die Pulspausedauer T21 umfassen im Zustand Z1 die gleiche Zeitdauer. Der Wert der Positionierabweichung 300 ist Null, das, bedeutet, daß die Schreibstiftposition eine exakte Abbildung des augenblicklichen Meßsignals 100 ist. Eine Korrektur der Schreibstiftposition ist somit nicht erforderlich.

Während des Zustandes Z2 ist durch eine sprunghafte Änderung des Meßsignals 100 die Positionierabweichung 300 stark positiv, infolgedessen ist die Pulsdauer T12 viel länger als die Pulspausedauer T22 der pulsbreitenmodulierten Positionierabweichung 400 im Zustand Z2. Der große Betrag der über die Summe aus Pulsdauer T12 und Pulspausedauer T22 normierten Zeitdifferenz zwischen der Pulsdauer T12 und der Pulspausedauer T22 bewirkt eine hohe Verfahrgeschwindigkeit des Schreibstiftes 10 in einer ersten Bewegungsrichtung quer zur Transportrichtung des Aufzeichnungsträgers.

Mit fortschreitender Nachführung des Schreibstiftes vermindert sich der Betrag der über die Summe aus Pulsdauer T12 und Pulspausedauer T22 normierten Differenz zwischen dem Schreibstiftpositionssignal 200 und dem Meßsignal 100, so daß die Positionierabweichung 300, wie im Zustand Z3 dargestellt, sich dem Wert Null annähert. Dabei ist weiterhin die Pulsdauer T13 größer als die Pulspausedauer T23, jedoch ist der Betrag der über die Summe aus Pulsdauer T13 und Pulspausedauer T23 normierten Differenz aus der Pulsdauer T13 und der Pulspausedauer T23 im Zustand Z3 kleiner als die Differenz aus der über die Summe aus Pulsdauer T13 und Pulspausedauer T23 normierten Pulsdauer T12 und der Pulspausedauer T22 im Zustand Z2. Mit zunehmender Verringerung des Betrages der über die Summe aus Pulsdauer T13 und Pulspausedauer T23 normierten Differenz aus Pulsdauer T13 und Pulspausedauer T23 verringert sich die Verfahrgeschwindigkeit des Schreibstiftes 10 quer zur Transportrichtung des Aufzeichnungsträgers bis zum Erreichen des Zustandes Z1.

Im Zustand Z4 ist eine sprunghafte Veränderung der Positionierabweichung 300 in den negativen Bereich dargestellt, der zur Folge hat, daß die Pulsdauer T14 viel kleiner ist als die Pulspausedauer T24. Der Betrag der über die Summe aus Pulsdauer T14 und Pulspausedauer T24 normierten Differenz aus Pulsdauer T14 und Pulspausedauer T24 ist vergleichsweise groß und bewirkt damit eine hohe Verfahrgeschwindigkeit des Schreibstiftes 10 quer zur Transportrichtung des Aufzeichnungsträgers und wegen dem negativen Vorzeichen der über die Summe aus Pulsdauer T14 und Pulspausedauer T24 normierten Differenz aus Pulsdauer T14 und Pulspausedauer T24 in einer zweiten zur ersten entgegengesetzten Bewegungsrichtung.

Mit zunehmender Annäherung des Schreibstiftpositionssignals 200 an das augenblickliche Meßsignal 100 nähert sich die Positionierabweichung 300 dem Wert Null, so daß, wie im Zustand Z5 dargestellt, die Pulsdauer T15 wächst und sich die Pulspausedauer T25 verkürzt bis der Zustand Z1 erreicht ist. Der Betrag der über die Summe aus Pulsdauer T15 und Pulspausedauer T25 normierten Differenz aus der Pulsdauer T15 und der Pulspausedauer T25 ist vergleichsweise gering, so daß der Schreibstift 10 mit geringer Verfahrgeschwindigkeit bewegt wird. Darüber hinaus ist die über die Summe aus Pulsdauer T15 und Pulspausedauer T25 normierte Differenz aus der Pulsdauer T15 und der Pulspausedauer T25 negativ, so daß der Schreibstift 10 in der zweiten Bewegungsrichtung verfahren wird.

Der besondere Vorteil dieses Positionierverfahrens ist darin zu sehen, daß trotz galvanischer Trennung zwischen Meßkreis und Motorsteuerkreis mit sehr einfachen Mitteln eine hohe Positioniergenauigkeit erreicht wird.

Die hohe Positioniergenauigkeit wird insbesondere dadurch erreicht, daß durch die Pulsbreitenmodulation, die durch ein binärcodiertes Ausgangssignal mit kontinuierlichem Übertragungsspektrum im Wertebereich gekennzeichnet ist, der Positionierabweichung 300 eine im Regelkreis restfehlerfreie Abbildung des Meßsignals 100 auf die Schreibstiftposition ermöglicht wird. Durch die Normierung bleiben diese für sich vorteilhaften Eigenschaften unabhängig von Temperaturschwankungen und alterungsbedingten Absolutwertänderungen der beteiligten Bauelemente.

Dazu ist der Fangbereich des Pulsbreitenmodulators 40 so auslegbar, daß einerseits bereits ihrem Betrage nach kleine absolute, von Null verschiedene Positionierabweichungen 300 eine große Veränderung des Tastverhältnisses der pulsbreitenmodulierten Positionierabweichung 400 bewirkt, was einer hohen inneren Verstärkung entspricht und damit einer präzisen Positionierbarkeit des Schreibstiftes 10 entsprechend dem Meßsignal 100, und andererseits Grenzen des Fangbereiches so dimensionierbar sind, daß das Erreichen eines Grenzwertes die maximale Verfahrgeschwindigkeit des Schreibstiftes 10 bewirkt. Dabei wird unter Fangbereich des Pulsbreitenmodulators 40 der Wertebereich der Positionierabweichung 300 verstanden, der in ein proportionales Tastverhältnis übertragbar ist. Überschreitet die Positionierabweichung 300 die obere Grenze des Fangbereiches, hat die pulsbreitenmodulierte Positionierabweichung 400 dauerhaft den logischen Zustand EINS, wobei der Schreibstift 10 mit maximaler Verfahrgeschwindigkeit in seiner ersten Bewegungsrichtung verfahren sind, bis die Positionierabweichung 300 die obere Grenze des Fangbereiches unterschreitet. Unterschreitet die Positionierabweichung 300 die untere Grenze des Fangbereiches, hat die pulsbreitenmodulierte Positionierabweichung 400 dauerhaft den logischen Zustand NULL, wobei der Schreibstift 10 mit maximaler Verfahrgeschwindigkeit in seiner zweiten Bewegungsrichtung verfahren wird, bis die Positionierabweichung 300 die untere Grenze des Fangbereiches überschreitet. Der Fangbereich des Pulsbreitenmodulators 40 ist in Figur 2 normiert durch die Grenzwerte "1" und "-1" der Amplitudenskala dargestellt.

## Patentansprüche

1. Verfahren zum Positionieren eines Schreibstiftes (10) in einer Registriereinrichtung zum Aufzeichnen des Zeitverlaufes mindestens eines anschaltbaren Meßsignals (100), bei dem die aktuelle Schreibstiftposition bestimmt wird, das Meßsignal mit der aktuellen Schreibstiftposition verglichen wird, wobei eine Positionierabweichung (300) als Differenz aus dem Meßsignal und der aktuellen Schreibstiftposition bestimmt wird, und bei dem in Abhängigkeit von der Positionierabweichung der Schreibstift (10) entsprechend dem Meßsignal mit einem Elektromotor (90) nachgeführt wird, wobei der Nachführungskreis ein Mittel zur galvanisch getrennten Übertragung elektrischer Signale beinhaltet.
**dadurch gekennzeichnet**,
daß die Positionierabweichung (300) pulsbreitenmoduliert wird,
daß die pulsbreitenmodulierte Positionierabweichung (400) potentialfrei an einen Signalumformer (70) übertragen wird,
daß mit dem Signalumformer (70) aus der pulsbreitenmodulierten
Positionierabweichung (400) durch Normierung der Differenz aus Pulsdauer (T11 bis T15) und Pulspausedauer (T21 bis T25) über die Summe aus Pulsdauer (T11 bis T15) und Pulspausedauer (T21 bis T25) eine Steuerspannung für den Elektromotor (90) bestimmt wird und
daß aus dem Vorzeichen der über die Summe aus Pulsdauer (T11 bis T15) und Pulspausedauer (T21 bis T25) normierten Differenz aus Pulsdauer (T11 bis T15) und Pulspausedauer (T21 bis T25) die Verfahrrichtung des Schreibstiftes (10) bestimmt wird.

2. Verfahren nach Anspruch 1
**dadurch gekennzeichnet**,
daß aus dem Betrag der über die Summe aus Pulsdauer (T11 bis T15) und Pulspausedauer (T21 bis T25) normierten Differenz aus Pulsdauer (T11 bis T15) und Pulspausedauer (T21 bis T25) die Verfahrgeschwindigkeit des Schreibstiftes (10)bestimmt wird.

## Claims

1. Method for positioning a pen (10) in a recording device for recording the time behaviour of at least one connectable measurement signal (100), in which the actual pen position is determined, the measurement signal is compared with the actual pen position, a positioning deviation (300) being determined as the difference between the measurement signal and the actual pen position, and in which the pen (10) is adjusted according to the measurement signal by an electric motor (90) as a function of the positioning deviation, the adjustment circuit comprising a means for the electrically isolated transmission of electrical signals,
characterised in that the positioning deviation (300) is pulse-width-modulated, that the pulse-width-modulated positioning deviation (400) is transmitted potential-free to a signal transducer (70), that a control voltage for the electric motor (90) is determined by means of the signal transducer (70) from the pulse-width-modulated positioning deviation (400) by normalising the difference between the pulse duration (T11 to T15) and pulse interval duration (T21 to T25) by means of the sum of the pulse duration (T11 to T15) and pulse interval duration (T21 to T25), and that the direction of travel of the pen (10) is determined from the sign of the difference between the pulse duration (T11 to T15) and pulse interval duration (T21 to T25), which is normalised by means of the sum of the pulse duration (T11 to T15) and pulse interval duration (T21 to T25).

2. Method according to claim 1,
characterised in that the speed of travel of the pen (10) is determined from the amount of the difference between the pulse duration (T11 to T15) and pulse interval duration (T21 to T25), which is normalised by means of the sum of the pulse duration (T11 to T15) and pulse interval duration (T21 to T25).

## Revendications

1. Procédé pour positionner un stylet (10) dans un appareil d'enregistrement pour enregistrer le profil au cours du temps d'au moins un signal de mesure (100) pouvant être présent, dans lequel la position actuelle du stylet est déterminée, le signal de mesure est comparé à la position actuelle du stylet, un écart de positionnement (300) étant déterminé comme différence à partir du signal de mesure et de la position actuelle du stylet, et dans lequel, de façon dépendant de l'écart de positionnement, le stylet (10), de façon correspondant au signal de mesure, est suivi par un moteur électrique (90), le circuit de poursuite comportant un moyen pour le transfert galvaniquement séparé de signaux électriques, caractérisé en ce que l'écart de positionnement (300) est soumis à une modulation d'impulsions en durée, en ce que l'écart de positionnement (400) soumis à une modulation d'impulsions en durée est transmis sans potentiel à un convertisseur de signaux (70), en ce qu'une tension de commande pour le moteur électrique (90) est déterminée par le convertisseur de signaux (70) à partir de l'écart de positionnement soumis à une modulation d'impulsions en durée (400) par normalisation de la différence de la durée d'impulsion (T11 à T15) et de la durée de pause d'impulsion (T21 à T25) par l'intermédiaire de la somme de la durée d'impulsion (T11 à T15) et de la durée de pause d'impulsion (T21 à T25), et en ce que le sens de déplacement du stylet (10) est déterminé à partir du signe de la différence normée par l'intermédiaire de la somme de la durée d'impulsion (T11 à T15) et de la durée de pause d'impulsion (T21 à T25) de la durée d'impulsion (T11 à T15) et de la durée de pause d'impulsion (T21 à T25).

2. Procédé selon la revendication 1,
caractérisé en ce que la vitesse de déplacement du stylet (10) est déterminée à partir de la valeur de la différence normée par l'intermédiaire de la somme de la durée d'impulsion (T11 à T15) et de la durée de pause d'impulsion (T21 à T25) de la durée d'impulsion (T11 à T15) et de la durée de pause d'impulsion (T21 à T25).
